# EUROPÄISCHE PATENTSCHRIFT

(11) **EP 1 143 215 B1**
(45) Veröffentlichungstag und Bekanntmachung des Hinweises auf die Patenterteilung: **27.07.2005**
(21) Anmeldenummer: 00107207.3
(22) Anmeldetag: 01.04.2000
(51) Int. Cl.: F25D 23/06, F25D 23/08, B29C 44/12, E04C 2/292

(54) **Wärmeisolierende Doppelwandung**
Thermally insulated double wall
Paroi double calorifugée

(43) Veröffentlichungstag der Anmeldung: 10.10.2001
(73) Patentinhaber: Seven-Air Gebr. Meyer AG, 6285 Hitzkirch (CH)
(72) Erfinder: Felix, Urs, 6285 Hitzkirch (DE)
(74) Vertreter: Troesch Scheidegger Werner AG

(56) Entgegenhaltungen:
- EP-A- 0 280 306
- EP-A- 0 660 056
- EP-A- 0 974 726
- FR-A- 1 028 001
- FR-A- 1 202 769
- FR-A- 2 332 401
- GB-A- 2 325 639
- US-A- 3 489 477
- US-A- 3 989 328

## Beschreibung

Die vorliegende Erfindung betrifft eine wärmeisolierende Doppelwandung, gebildet durch mindestens zwei Wandbleche und einen zwischenliegenden, isolierenden Hohlraum, vorzugsweise ausgefüllt mit einem isolierenden Material mit einer geringen Wärmeleitfähigkeit, ein Verfahren zur Herstellung einer wärmeisolierenden Doppelwandung sowie die Verwendung der Doppelwandung als Seitenwände bei Klimageräten und dergleichen.

Wandungen von Lüftungs- und Klimageräten, wie Klimakästen, Kühlschränke, Trockenschränke und dergleichen müssen eine gute Wärmeisolation aufweisen, um Wärmeverlust bzw. "Kälte"-Verlust zu verhindern oder mindestens substantiell zu reduzieren. Derartige Wandungen sind in der Regel doppelwandig ausgebildet, mit einem dazwischen liegenden, mit wärmeisolierendem Material ausgefüllten Hohlraum, wie beispielsweise mit einem geschäumten polymeren Werkstoff, wie geschäumtes Polyurethan.

Das Problem besteht bei der seitlichen Einfassung bzw. dem Seitenrand dieser Wandungen, indem bei der umlaufenden Umbiegung der beiden in der Regel aus einem Metallblech bestehenden Wandbleche eine Wärmebrücke entsteht, womit der Isolationseffekt empfindlich beeinflusst werden kann. Konstruktionen, bei welchen die beiden Metallblechwände seitlich über isolierende Materialien miteinander verbunden sind, sind entweder sehr aufwendig und teuer oder aber verfügen nicht über eine ausreichende Stabilität.

In der französischen Patentanmeldung FR-A-2 332 401 wird eine isolierende Anordnung zwischen zwei vorfabrizierten Blechteilen vorgeschlagen, wobei ein Isolierkörper zwischen den beiden Blechen angeordnet ist. Die Anordnung wird verwendet für Kühleinheiten. Dabei werden die beiden vorfabrizierten Abdeckbleche durch endständig angeordnete Querstreben zusammengehalten. Durch die Art der Querstreben und der endständigen Ausgestaltung der beiden Bleche wird eine einfache Herstellung der wärmeisolierenden Anordnung verhindert.

Es ist daher eine Aufgabe der vorliegenden Erfindung, eine wärmeisolierende Wandung der bekannten Art vorzuschlagen, bei welcher die seitlichen Randeinfassungen eine thermische Entkoppelung aufweisen und trotzdem aber eine einfache und billige Herstellungsweise der wärmeisolierenden Wandungen ermöglichen.

Erfindungsgemäss wird die gestellte Aufgabe mittels einer wärmeisolierenden Doppelwandung gemäss dem Wortlaut nach Anspruch 1 sowie mittels einem Verfahren zum Erzeugen einer wärmeisolierenden Doppelwandung gemäss dem Wortlaut nach Anspruch 10 gelöst.

Vorgeschlagen wird eine wärmeisolierende Doppelwandung, beispielsweise geeignet für die Verwendung bei Lüftungs- und Klimageräten, welche gebildet wird durch mindestens zwei Wandbleche und einen dazwischen liegenden isolierenden Hohlraum, welcher vorzugsweise ausgefüllt ist mit einem wärmeisolierenden Material. Die beiden Wandbleche weisen im Randbereich der Doppelwandung je eine U-förmige Umkragung auf, wobei deren Endkanten je an oder in einem Isolierkörper gehalten sind, welcher aus einem isolierenden Material mit geringer Wärmeleitfähigkeit gefertigt ist.

Dabei sind die beiden Endkanten der beiden Umkragungen in Richtung senkrecht zu den beiden Wandblechen voneinander beabstandet, und mindestens eine der Endkanten ist in einer Einkerbung bzw. Längsnut des Isolierkörpers gehalten.

Der Isolierkörper besteht vorzugsweise aus einem polymeren Material, wie insbesondere einem geschäumten Polymer, welches aber bevorzugt eine höhere Dichte aufweist als der üblicherweise bei derartigen Doppelwandungen im Hohlraum angeordnete Isolierschaum.

Im Isolierkörper sind vorzugsweise parallel zur Wandung verlaufende Öffnungen vorgesehen, für das Einschiessen bzw. Einspritzen eines Polymerschaumes in den isolierenden Hohlraum zwischen den beiden Wandblechen.

Selbstverständlich ist es auch möglich, anstelle eines Polymerschaumes faseriges Material bzw. Mineralwolle oder dergleichen im isolierenden Hohlraum anzuordnen, insbesondere ist beispielsweise Mineralwolle dann bevorzugt zu verwenden, wenn gleichzeitig Schallisolation ein Thema ist.

Je nach Ausbildung des Lüftungs- oder Klimagerätes ist die Doppelwandung weitgehendst viereckig bzw. rechteckig ausgebildet, und eine Wandung inklusive U-förmige Umkragung weist eine grössere Flächenausdehnung auf als die andere Wandung bzw. das andere Wandblech, wodurch im Randbereich eine Abstufung gebildet ist.

Als Funktionselement bei der Herstellung der erfindungsgemäss vorgeschlagenen isolierenden Doppelwandung sind im Randbereich der Wandungen klammerartige Positionsorgane vorgesehen zum Positionieren des Isolierkörpers bei der Montage, aufweisend ein Festlegeorgan zum Verbinden des Positionierorgans mit mindestens einer der beiden Wandungen bzw. deren Umkragung sowie aufweisend Festhaltemittel, wie beispielsweise Schnapp- oder federnde Halteorgane, zum Festhalten des Isolierkörpers in bezug auf das mindestens eine Wandblech bzw. in bezug auf deren Umkragung.

Weitere bevorzugte Ausführungsvarianten der erfindungsgemässen isolierenden Doppelwandung sind in den abhängigen Ansprüchen charakterisiert.

Für die Herstellung einer wärmeisolierenden Doppelwandung wird an der Umkragung des einen Wandbleches ein Positionierorgan mit einem Abschnitt der Umkragung beispielsweise steckbar verbunden, um gleichzeitig den Isolierkörper zu positionieren, wobei der Isolierkörper einerseits eine Einkerbung oder Längsnut aufweist, in welche die Endkante der Umkragung des einen Wandbleches eingeführt wird und der Isolierkörper gleichzeitig an den Festhaltemitteln des Positionierorganes angeordnet wird, worauf anschliessend das andere Wandblech mit der entsprechenden Umkragung an den Isolierkörper an- bzw. aufgelegt wird und mit diesem verbunden wird.

Vorzugsweise sind die Festhaltemittel am Positionierorgan derart ausgebildet, dass sie gleichzeitig geeignet sind zum Festlegen der Umkragung des anderen Wandbleches und um diese Umkragung mit dem Isolierkörper zu verbinden. So kann es sich beispielsweise bei den Festhaltemitteln um einen federnden Haken handeln, welcher sowohl den Isolierkörper als auch die Endkante der Umkragung des anderen Wandbleches festhalten kann.

Weitere bevorzugte Ausführungsvarianten des erfindungsgemässen Verfahrens sind in den abhängigen Verfahrensansprüchen charakterisiert.

Die erfindungsgemäss definierte wärmeisolierende Doppelwandung ist insbesondere geeignet als Seitenwandung bzw. Wandpaneel für Lüftungs- und Klimageräte, wie Kühlschränke, Wärmeschränke bzw. Trockenschränke oder generell als wärmeisolierendes Paneel, welches beispielsweise zum Abschotten eines zu klimatisierenden Raumes benötigt wird.

Die Erfindung wird nun anschliessend beispielsweise und unter Bezug auf die beigefügten Figuren näher erläutert.

Dabei zeigen:
- Fig. 1: in Perspektive, schematisch, einen Abschnitt einer erfindungsgemässen wärmeisolierenden Doppelwandung;
- Fig. 2: im Querschnitt, den Randbereich der wärmeisolierenden Doppelwandung aus Fig. 1;
- Fig. 3: schematisch, einen Ausschnitt einer Wandung der wärmeisolierenden Doppelwandung mit angeordnetem Isolierkörper bei der Montage bzw. bei der Herstellung der erfindungsgemässen Doppelwandung;
- Fig. 4: einen Schnitt entlang der Linie A-A aus Fig. 3;
- Fig. 5: im Querschnitt, den Randbereich einer weiteren Ausführungsvariante einer wärmeisolierenden Doppelwandung, und
- Fig. 6: in Ansicht von oben, den Eckbereich einer wärmeisolierenden Doppelwandung gemäss Ausführungsvariante 5 während der Montage bzw. Herstellung der Doppelwandung.

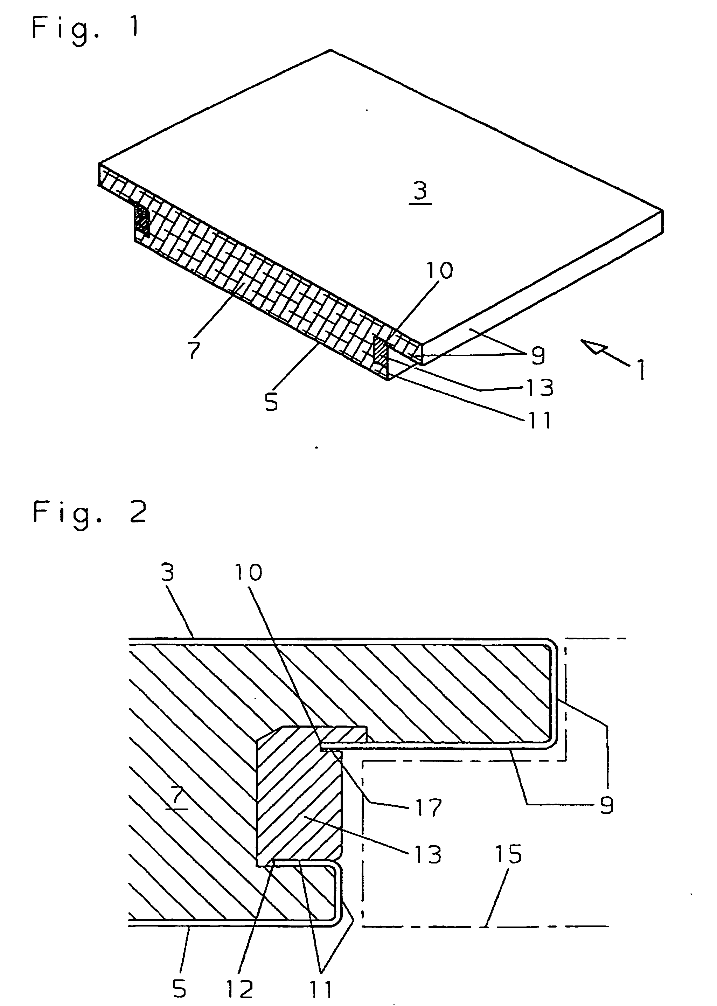

Fig. 1 zeigt schematisch, in Perspektive einen Teil einer erfindungsgemässen wärmeisolierenden Doppelwandung 1, aufweisend eine äussere Wandung 3 und eine innere Wandung 5, je gebildet beispielsweise durch ein Metallblech. Im Randbereich der Doppelwandung 1 weist das äussere Wandblech 3 eine seitliche, U-förmige Umkragung 9 auf, währenddem die innere Wandung 5 im Randbereich eine U-förmige Umkragung 11 aufweist. Die beiden Endkanten 10 und 12 der Umkragungen 9 und 11 sind in resp. an einem Isolierkörper 13 gehalten, welcher die beiden Endkanten der beiden U-förmigen Umkragungen miteinander verbindet. Zwischen den beiden Wandblechen 3 und 5 ist der gebildete isolierende Hohlkörper durch eine Schaummasse 7 ausgefüllt, wie beispielsweise durch einen PU-Schaum.

Fig. 2 zeigt den Randbereich aus Fig. 1 im Querschnitt, wobei nun deutlich erkennbar ist, dass die Endkante 10 der äusseren Umkragung 9 in einer Einkerbung bzw. Nut 17 des Isolierkörpers 13 gehalten ist, währenddem die Endkante 12 der inneren Umkragung 11 am Isolierkörper 13 anliegt.

In Fig. 2 gestrichelt dargestellt ist beispielweise ein Seitenkantenprofil 15, welches das Profil 15 einer Gehäusekante eines Lüftungs- oder Klimagerät-Gehäuses bilden kann. Damit im Bereich des Aneinanderstossens der Doppelwandung 1 mit dem Profil 15 keine Wärmebrücken von innen nach aussen entstehen können, darf selbstverständlich dieses Profil 15 analog dem Seitenabschluss der Doppelwandung 1 ebenfalls keine Wärmebrücke aufweisen, und vorzugsweise sind im Bereich des Aneinanderstossens der beiden Abstufungen dichtende und isolierende Materialien, wie beispielsweise Gummidichtungen vorgesehen.

Aus den schematischen Darstellungen in den Fig. 1 und 2 ist nun deutlich erkennbar, dass im Randbereich der Doppelwandung 1 eine thermische Entkoppelung vorhanden ist, womit eine optimale Wärmeisolierung gewährleistet ist. Durch das Ausbilden der Abstufung ist es zudem möglich, die erfindungsgemässe Doppelwandung 1 formschlüssig an ein weiteres Element anzuschliessen, wie beispielsweise das in Fig. 2 gestrichelt dargestellte Profil 15.

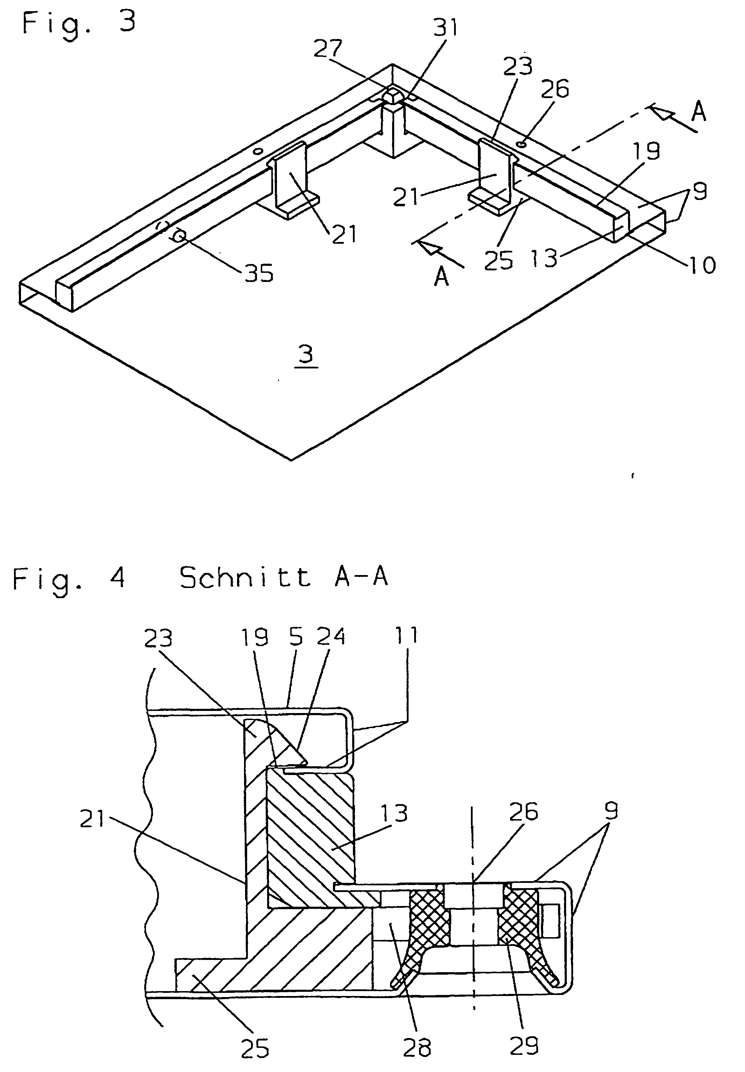

Anhand der Fig. 3 bis 6 soll nun dargelegt werden, auf welch einfache Art und Weise die wärmeisolierende Doppelwandung 1 gemäss der beiden Fig. 1 und 2 herstellbar ist.

Fig. 3 zeigt dabei in Perspektive erneut einen Ausschnitt bzw. den Eckteil einer erfindungsgemässen Doppelwandung während der Montage, wobei in der Darstellung gemäss Fig. 3 lediglich das äussere Wandblech 3 vorhanden ist resp. das innere Wandblech fehlt. Im Bereich der seitlichen Umkragung 9 ist erneut entlang der Endkante der Isolierkörper 13 angeordnet, in welchem in einer Einkerbung bzw. Längsnut 17 die Endkante 10 der Umkragung 9 eingeführt bzw. eingesteckt angeordnet ist.

Um den Isolierkörper 13 stabil zu positionieren, sind weiter Festhalteklammern 21 vorgesehen, welche einerseits einen Standfuss 25 aufweisen für ein standfestes Aufliegen auf der Innenseite des Wandbleches 13. Andererseits weist die Festhalteklammer 21 an ihrem oberen Ende einen federnden, hakenartigen Vorsprung 23 auf, welcher eine nach oben vorstehende, kragenartige Abstufung 19 des Isolierkörpers 13 festhält. In der seitlichen Umkragung 9 ist weiter eine Lochung 26 angeordnet zum Halten eines Festhalteklotzes 29, welcher insbesondere in Fig. 4 erkennbar ist. Fig. 4 zeigt den Schnitt durch den Randbereich der Umkragung 9 aus Fig. 3 entlang der Linie A-A. Dieser Festhalteklotz 29 dient zum festen Positionieren der Festhalteklammer 21, indem dieser Festhalteklotz 29 beispielsweise mittels hakenartigen Klammern 28 umgriffen wird, mittels welchen die Festhalteklammer 21 einsteckbar an der Umkragung 9 festlegbar ist.

Im Eckbereich des Wandbleches 3 ist ein Eckhalter 27 vorgesehen, welcher analog der Festhalteklammer 21 an der Umkragung 9 festlegbar ist. Dieser Eckhalter 27 kann derart ausgebildet bzw. profiliert sein, dass der Isolierkörper 13 beispielsweise mittels einer Lasche bzw. Zunge 31 im Eckhalter 27 eingreifend fest positioniert werden kann.

Da alle die dargestellten Elemente steckbar sind, ist die Erstellung bzw. Montage der Anordnung gemäss Fig. 3 bzw. Fig. 4 einfach und kostengünstig, da alle die verwendeten Teile auf einfachste Art und Weise, beispielsweise mittels Spritzgiessen, hergestellt werden können.

Zum schlussendlichen Herstellen der Doppelwandung kann nun die innere Blechwandung 5 auf die Anordnung gemäss Fig. 3 aufgesteckt werden, indem beim Auflegen der inneren Wandung mit der Umkragung 11 deren Eckkante 12 entlang der abgeschrägten Kontur 24 des federnden Vorsprunges 23 gleitet und diesen Vorsprung nach innen treibt. Sobald die Kante 12 die abgeschrägte Flanke 24 passiert hat, kommt diese Kante hinter den Kragen bzw. die Abstufung 19 des Isolierkörpers zu liegen, womit der federnde Vorsprung 23 wieder zurückspringen kann und der Vorsprung 11 des Bleches 15 fest auf dem Isolierkörper 13 gehalten wird.

Um nun die isolierende Doppelwandung fertigzustellen, kann abschliessend durch die Öffnung 35 im Isolierkörper 13 eine fliess- bzw. spritzfähige Schaummasse in den Hohlraum zwischen die beiden Bleche 3 und 5 eingespritzt werden, wo anschliessend durch Aushärtung des Schaums die erfindungsgemässe isolierende Doppelwandung fertiggestellt wird. Durch die Verfestigung des im Hohlraum angeordneten Schaums wird selbstverständlich auch der Randbereich der Doppelwandung vollständig verfestigt und stabilisiert.

Anstelle der Verwendung eines Schaumes ist es natürlich auch möglich, in der Doppelwandung Mineralwolle oder andere faserige Materialien zu verwenden, wobei diese natürlich vor dem Anordnen der Blechwandung 5 auf die Anordnung gemäss Fig. 3 an- bzw. einzubringen sind. Derartige mineralwolleartige Materialien sind insbesondere dann zu verwenden, wenn beispielsweise zusätzlich zur Wärmeisolation ebenfalls eine gute Schallisolation zu gewährleisten ist.

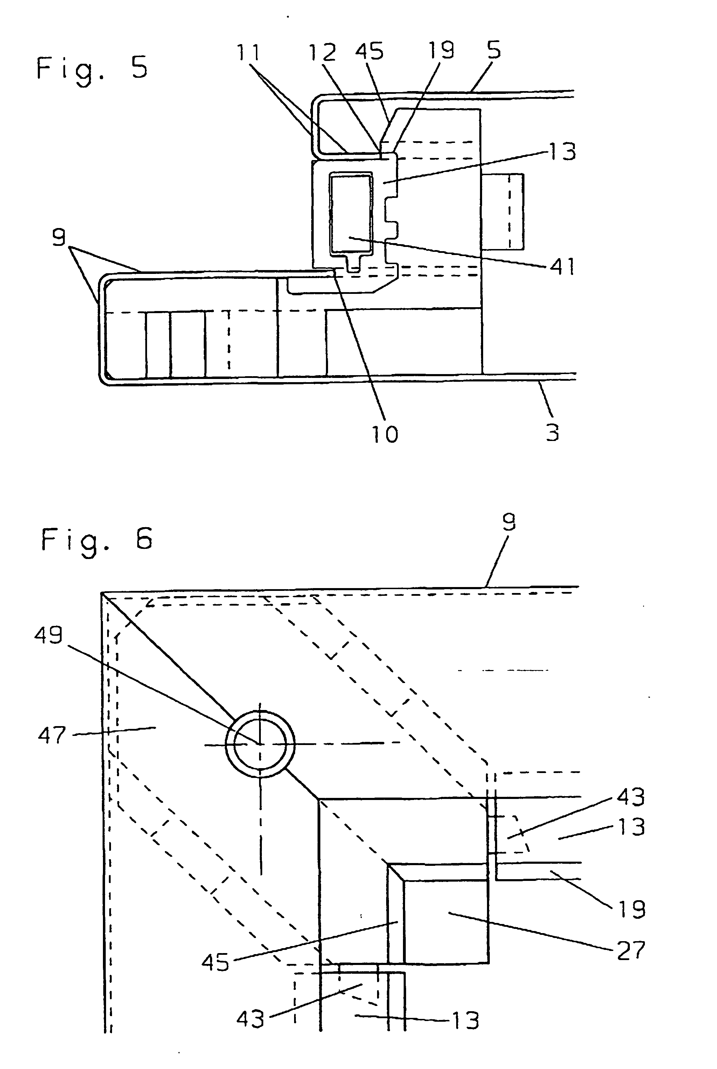

Fig. 5 zeigt im Querschnitt eine weitere Ausführungsvariante des Randbereiches bzw. Eckbereiches einer erfindungsgemässen wärmeisolierenden Doppelwandung, welche im Gegensatz zu den vorab beschriebenen Konstruktionen einen Isolierkörper 13 aufweist, welcher profiliert ist und mittig einen Hohlraum 41 aufweist. Die übrige Konstruktion ist analog derjenigen, beschrieben in den vorangehenden Figuren.

Der Vorteil dieses Hohlraumes 41 wird anhand von Fig. 6 verdeutlicht, wo schematisch von oben gesehen eine Ecke der isolierenden Doppelwandung dargestellt ist, aufweisend einen Eckhalter 27, welcher je gegen die Seitenkanten hin gerichtet einen Vorsprung 43 aufweist. Dieser ist vorgesehen, um im Hohlraum 41 des Isolierkörpers 13 einzugreifen. Der Eckhalter 27 ist als Positionierkörper ausgebildet und weist an der Fusspartie 47 einen Vorsprung auf, der im Eckbereich der äusseren Umkragung 9 in einem gestanzten Loch 49 gehalten ist. Im weiteren weist der Eckhalter 27 analog der Festhalteklammer 21 eine abgeschrägte Flanke 45 auf, welche zur Positionierung des inneren Abschlussbleches 5 dient. Eckhalter 27 mit der Fusspartie 47 sind vorzugsweise aus einem Stück gefertigt.

In der Darstellung gemäss Fig. 6 wird verdeutlicht, dass infolge der je seitlich vom Eckhalter 27 vorstehenden Vorsprünge 43 ein stabiles Positionieren resp. Anordnen der Isolierkörper 13 ermöglicht wird, indem der Isolierkörper 13 mittels dem Hohlraum 41 auf dem Vorsprung 43 aufgesteckt wird.

Ein weiterer Vorteil der Ausbildung des Isolierkörpers 13 mit einem Hohlkörper liegt darin, dass bei der Herstellung der Isolierkörper aus einem langen Hohlkörperprofil exakt auf die gewünschte Länge jeweils am Ende gerade abgeschnitten werden kann, im Gegensatz zum Isolierkörper, verwendet in den Fig. 3 und 4.

Durch die erfindungsgemäss vorgeschlagene Ausbildung des Eckhalters 27 mit der Fusspartie 47 wird weiter sichergestellt, dass im Bereich der Gehrung der Umkragung 9, beispielsweise beim Schäumen der Doppelwandung, kein Schaum austreten kann. Mit anderen Worten wird dieser Gehrungsbereich durch die Fusspartie 47 abgedichtet.

Die Darstellungen in den Fig. 1 bis 6 zeigen Beispiele, und die Erfindung ist selbstverständlich keinesfalls auf diese eingeschränkt. Insbesondere der abgestuft dargestellte Randbereich kann X-beliebig modifiziert oder abgeändert werden, je nach dem, wie beispielsweise ein daran anschliessendes Profil konstruiert resp. ausgelegt ist, an welches die erfindungsgemässe Doppelwandung anzulegen ist. So ist es beispielsweise auch möglich, im Isolierkörper eine weitere Abstufung nach aussen vorzusehen, um gegebenenfalls die Isolierwirkung im Bereich des Aufeinandertreffens der Doppelwandung mit dem anschliessenden Profil zu erhöhen. Auch können auf den Randbereich isolierende bzw. abdichtende Materialien aufgebracht werden, wie Gummidichtungen und dergleichen.

Wiederum ist die Wahl der für die Konstruktion der Doppelwandung gewählten Materialien an sich unerheblich, so ist es insbesondere möglich, anstelle des erwähnten PU-Schaums oder der Mineralwolle ein anderes, gut wärmeisolierendes Material zu verwenden, wie beispielsweise einen Schaum aus einem anderen polymeren Material. Für die Wandabschlussbleche kann Eisenblech verwendet werden, Aluminiumblech oder ein anderer metallener Werkstoff.

Insbesondere erfindungswesentlich ist, dass im Randbereich der Doppelwandung die beiden Wandbleche je eine U-förmige Umkragung aufweisen und über einen Verbindungskörper miteinander verbunden sind, welcher aus einem isolierenden Material mit einer geringen Wärmeleitfähigkeit gefertigt ist.

## Patentansprüche

1. Wärmeisolierende Doppelwandung (1), gebildet durch mindestens zwei Wandbleche (3, 5) und einem zwischenliegenden, isolierenden Hohlraum (7), vorzugsweise ausgefüllt mit einem wärmeisolierenden Material, wobei im Randbereich der Doppelwandung die beiden Wandbleche (3, 5) je eine U-förmige Umkragung (9, 11) aufweisen, deren Endkanten (10, 12) je an oder in einem Halte- oder Verbindungskörper bzw. Isolierkörper (13) gehalten sind, welcher aus einem isolierenden Material mit einer geringen Wärmeleitfähigkeit gefertigt ist, und **dass** die Endkanten (10, 12) der beiden Umkragungen (9, 11) in Richtung senkrecht zu den beiden Wandblechen voneinander beabstandet sind, **dadurch gekennzeichnet, dass** mindestens eine der Endkanten (10) in einer Einkerbung (17) bzw. Längsnut des Halte- bzw. Verbindungskörpers (13) gehalten ist, wobei im Randbereich der Doppelwandung Positionierorgane (21) vorgesehen sind zum Positionieren des Halte- bzw. Verbindungskörpers (13) bei der Montage mindestens in Bezug zu einer Umkragung (9).

2. Doppelwandung, nach Anspruch 1, **dadurch gekennzeichnet, dass** der Halte- bzw. Verbindungskörper (13) aus einem polymere Material mit einer geringen Wärmeleitfähigkeit besteht, wie insbesondere einem geschäumten Polymer.

3. Doppelwandung, nach einem der Ansprüche 1 oder 2, **dadurch gekennzeichnet, dass** der Halte- und Verbindungskörper (13) ein Hohlprofil aufweist.

4. Doppelwandung, nach einem der Ansprüche 1 bis 3, **dadurch gekennzeichnet, dass** die Doppelwandung weitgehendst vier- bzw. rechteckig ausgebildet ist und die eine Wandung (3) inklusive Umkragung (9) eine grössere Flächenausdehnung aufweist als die andere Wandung (5), wodurch im Randbereich eine Abstufung gebildet ist.

5. Doppelwandung, nach einem der Ansprüche 1 bis 4, **dadurch gekennzeichnet, dass** im Randbereich klammerartige Positionierorgane (21) vorgesehen sind zum Positionieren des Halte- bzw. Verbindungskörpers (13) bei der Montage, aufweisend mindestens einen Abschnitt (23) zum Halten und Positionieren des Halte- und Verbindungskörpers (13) sowie mindestens einen weiteren Abschnitt, aufweisend vorzugsweise ein einschnappendes, federndes, klammerartiges Halteorgan (28) zum festen Positionieren des klammerartigen Positionierorganes (21) in bezug mindestens zur einen Umkragung (9).

6. Doppelwandung, nach einem der Ansprüche 1 bis 5, **dadurch gekennzeichnet, dass** im Eckbereich der Doppelwandung ein Eckhalter (27) vorgesehen ist, welcher an mindestens einer der Umkragungen (9, 11) festlegbar ist und welcher vorgesehen ist zum Festlegen zweier im Eckbereich der Doppelwandung endender Halte- und Verbindungskörper bzw. Isolierkörper (13).

7. Doppelwandung, nach Anspruch 6, **dadurch gekennzeichnet, dass** der Eckhalter (27) mittels einer Fusspartie (47) in mindestes einer der Umkragungen (9, 11) festlegbar ist, welche Fusspartie (47) sich entlang der Eckgehrung der mindestens einen Umkragung (9) erstreckt zum dichten Abschliessen der Gehrung, und wobei der Eckhalter (27) je in Richtung der beiden anstossenden Halte- und Verbindungskörper bzw. Isolierkörper (13) eine Lasche bzw. Zunge (13) aufweist, vorgesehen um in das Hohlprofil des Halte- und Verbindungskörpers bzw. Isolierkörpers (13) einzugreifen und diesen im Eckbereich der Doppelwandung festzulegen.

8. Doppelwandung, nach einem der Ansprüche 1 bis 7, **dadurch gekennzeichnet, dass** die Positionierorgane (21) ein federndes Festhaltemittel (23) aufweisen für das Aufnehmen und feste Positionieren der anderen Umkragung (11).

9. Doppelwandung, nach einem der Ansprüche 1 bis 8, **dadurch gekennzeichnet, dass** im Halte- bzw. Verbindungskörper (13) Öffnungen bzw. Durchgänge (35) angeordnet sind, welche Öffnungen bzw. Durchgänge parallel zur flächigen Ausdehnung der Doppelwandung ausgebildet sind und welche vorgesehen sind für das Einschiessen bzw. Einspritzen beispielsweise eines Polymerschaumes in den isolierenden Hohlraum (7).

10. Verfahren zum Herstellen einer wärmeisolierenden Doppelwandung (1), gebildet durch mindestens zwei Wandbleche (3, 5) und einem zwischenliegenden, isolierenden Hohlraum (7), **dadurch gekennzeichnet, dass** an einer Umkragung (9) des einen Wandbleches (3) ein Positionierorgan (21) mit einem vorzugsweise als Festhalteklotz (29) ausgebildeten Abschnitt der Umkragung vorzugsweise steckbar verbunden wird, um ein Halte- oder Verbindungskörper (13) zu positionieren, wobei die Endkante der Umkragung (10) in einer Einkerbung bzw. Längsnut (17) des Halte- oder Verbindungskörpers (13) eingeführt wird und anschliessend das andere Wandblech (5) mit der Umkragung (11) an den Halte- bzw. Verbindungskörper (13) an- bzw. aufgelegt und mit diesem verbunden wird.

11. Verfahren, nach Anspruch 10, **dadurch gekennzeichnet, dass** am Positionierorgan (21) federnde Festhaltemittel (23) vorgesehen sind, an welche das andere Blech mit der Endkante (12) der Umkragung zugeführt und einschnappend oder einrastend festgelegt werden kann.

12. Verfahren, nach einem der Ansprüche 10 oder 11, **dadurch gekennzeichnet, dass** die Festhaltemittel (23) gleichzeitig vorgesehen sind zum Positionieren und Halten des Halte- oder Verbindungskörpers (13) wie auch zum Festlegen der Endkante (12) der Umkragung (11) des anderen Bleches (5).

13. Wärmeisolierendes Wandpaneel eines Klimagerätes, wie eines Wärmeschrankes, eines Trockenschrankes, eines Kühlgerätes etc., aufweisend eine isolierende Doppelwandung nach einem der Ansprüche 1 bis 9.

## Claims

1. Heat insulating double wall (1) formed by at least two wall sheets (3, 5) and an intermediate insulating cavity (7), preferably filled with a heat insulating material, the two wall sheets (3, 5) each having a U-shaped bending (9, 11) in the border area of the double wall, the end edges (10, 12) of the bendings (9, 11) each being hold at or in a holding or connection body or an insulating body (13) respectively which is made of a heat insulating material of a low heat conductivity, and that the end edges (10, 12) of the two bendings (9, 11) are arranged apart from one another in a direction perpendicular to the two wall sheets, **characterized in that** at least one of the end edges (10) is hold in a notching (17) or a longitudinal groove of the holding or connection body (13), positioning members (21) for positioning the holding or connection body (13) during assembly at least with respect to one bending (9) being provided in the border area of the double wall.

2. Double wall according to claim 1, **characterized in that** the holding or connection body (13) consists of a polymeric material with low heat conductivity, like in particular a foamed polymer.

3. Double wall according to claim 1 or 2, **characterized in that** the holding and connection body (13) comprises a hollow profile.

4. Double wall according to one of the claims 1 to 3, **characterized in that** the double wall is formed to the largest extent four-cornered or rectangularly and the one wall (3) including the bending (9) has a larger surface extension than the other wall (5), whereby a gradation is formed in the border area.

5. Double wall according to one of the claims 1 to 4, **characterized in that** cramp like positioning members (21) for positioning the holding or connection body (13) during assembly are provided in the border area, the positioning members (21) having at least one portion (23) for holding and positioning the holding or connection body (13) and at least a further portion having preferably a snapping, resilient cramp like holding member (28) for the fixed positioning of the cramp like positioning member (21) with respect to at least one bending (9).

6. Double wall according to one of the claims 1 to 5, **characterized in that** a corner holder (27) is provided in the corner area of the double wall, the corner holder (27) being fixable at at least one of the bendings (9, 11) and being provided for the fixing of two holding and connection bodies or insulating bodies (13) terminating in the corner area of the double wall.

7. Double wall according to claim 6, **characterized in that** the corner holder (27) is fixable by means of a food section (47)in at least one of the bendings (9, 11), which food section (47) extents along the corner mitre of the at least one bending (9) for close terminating the mitre, the corner holder (27) having a lashing or tongue (43) each in direction of the two abutting holding and connection bodies or insulating bodies (13) respectively, the lashing or the tongue (43) being provided to engage into the hollow profile of the holding and connection body or insulating body (13) respectively and to fix it in the corner area of the double wall.

8. Double wall according to one of the claims 1 to 7, **characterized in that** the positioning members (21) have a resilient retaining means (23) for the receiving and the fix positioning of the other bending (11).

9. Double wall according to one of the claims 1 to 8, **characterized in that** openings or passages are arranged in the holding or connection body (13), which openings or passages being formed parallel to the plane extension of the double wall and being provided for the introduction or the injection for example of a polymer foam into the insulating cavity (7).

10. Method for manufacturing a heat insulating double wall (1) formed by at least two wall sheets (3, 5) and an intermediate insulating cavity (7), **characterized in that** a positioning member (21) is connected preferably pluggable with a portion of the bending preferably designed as a retaining block (29) at a bending (9) of the one wall sheet (3) for positioning a holding or connection body (13), the end edge of the bending (10) being introduced in a notching or a longitudinal groove (17) of the holding or connection body (13) and subsequently the other wall sheet (5) being with the bending (11) placed on or joined to the holding or connection body and connected to it.

11. Method according to claim 10, **characterized in that** resilient retaining means (23) are provided at the positioning member (21), at which retaining means the other sheet can be added with the end edge (12) to the bending (23) and can be fixed by snapping or engaging.

12. Method according to claim 10 or 11, **characterized in that** the retaining means (23) are provided simultaneously for positioning and holding the holding or connection body (13) as well as for fixing the end edge (12) of the bending (11) of the other sheet (5).

13. Heat insulating wall panel of an air conditioning device, like for example a warming cupboard, a drying cupboard, a refrigerating device etc., having an insulating double wall according to one of the claims 1 to 9.

## Revendications

1. Paroi double calorifuge (1), formée par au moins deux tôles de paroi (3, 5) et un espace creux isolant (7) situé entre, rempli de préférence d'un matériau calorifuge, où dans la zone de bord de la paroi double, les deux tôles de paroi (3, 5) présentent chacune un repliage en forme de U (9, 11) dont les bords d'extrémité (10, 12) sont retenus respectivement à ou dans un corps de retenue ou de liaison respectivement corps isolant (13) qui est fabriqué en un matériau isolant d'une faible conductibilité thermique, et en ce que les bords d'extrémité (10, 12) des deux repliages (9, 11) sont espacés l'un de l'autre dans la direction perpendiculaire aux deux tôles de paroi, **caractérisée en ce qu'**au moins l'un des bords d'extrémité (10) est retenu dans une encoche (17) respectivement rainure longitudinale du corps de retenue respectivement de liaison (13), où dans la zone de bord de la paroi double, des organes de positionnement (21) sont prévus pour le positionnement du corps de retenue respectivement de liaison (13) lors du montage au moins relativement à un repliage (9).

2. Paroi double selon la revendication 1, **caractérisée en ce que** le corps de retenue respectivement de liaison (13) est constitué d'un matériau polymère d'une faible conductibilité thermique, comme en particulier d'un polymère moussé.

3. Paroi double selon l'une des revendications 1 ou 2, **caractérisée en ce que** le corps de retenue et de liaison (13) présente un profilé creux.

4. Paroi double selon l'une des revendications 1 à 3, **caractérisée en ce que** la paroi double est réalisée dans la plus grande mesure d'une manière carrée respectivement rectangulaire, et qu'une paroi (13) y compris le repliage (9) présente une superficie plus grande que l'autre paroi (5), par quoi est formé dans la zone de bord un gradin.

5. Paroi double selon l'une des revendications 1 à 4, **caractérisée en ce que** sont prévus dans la zone de bord des organes de positionnement (21) en forme de pince pour le positionnement du corps de retenue respectivement de liaison (13) lors du montage, présentant au moins une section (13) pour la retenue et le positionnement du corps de retenue et de liaison (13) ainsi qu'au moins une autre section, présentant de préférence un organe de retenue élastique en forme de pince (28) à encliquetage, pour le positionnement fixe de l'organe de positionnement en forme de pince (21) relativement à au moins un repliage (9).

6. Paroi double selon l'une des revendications 1 à 5, **caractérisée en ce qu'**il est prévu dans la zone de coin de la paroi double un support de coin (27) qui peut être fixé à au moins l'un des repliages (9, 11) et qui est prévu pour la fixation de deux corps de retenue et de liaison respectivement corps isolant (13) se terminant dans la zone de coin de la paroi double.

7. Paroi double selon la revendication 6, **caractérisée en ce que** le support de coin (27) peut être fixé au moyen d'une partie de pied (47) dans au moins l'un des repliages (9, 11), ladite partie de pied (47) s'étendant le long de l'onglet de coin d'au moins un repliage (9) pour la fermeture étanche de l'onglet, et où le support de coin (27) présente respectivement dans la direction des deux corps de retenue et de liaison respectivement corps isolants (13) venant en butée une patte ou languette (43), prévue pour s'engager dans le profilé creux du corps de retenue et de liaison respectivement du corps isolant (13) et pour fixer celui-ci dans la zone de coin de la paroi double.

8. Paroi double selon l'une des revendications 1 à 7, **caractérisée en ce que** les organes de positionnement (21) présentent un moyen de retenue élastique (23) pour la réception et le positionnement fixe de l'autre repliage (11).

9. Paroi double selon l'une des revendications 1 à 8, **caractérisée en ce que** sont disposées dans le corps de retenue respectivement de liaison (13) des ouvertures respectivement des passages (35), lesdites ouvertures ou passages sont réalisés parallèlement à la superficie de la paroi double et qui sont prévus pour l'introduction respectivement l'injection par exemple d'une mousse de polymère dans l'espace creux (7) à isoler.

10. Procédé de fabrication d'une paroi double calorifuge (1), formée par au moins deux tôles de paroi (3, 5) et un espace creux isolant (7) situé entre, **caractérisé en ce que**, à un repliage (9) d'une tôle de paroi (3), un organe de positionnement (21) est relié de préférence par enfichage à un tronçon du repliage réalisé de préférence comme bloc de retenue (29), pour positionner un corps de retenue ou de liaison (13), où le bord d'extrémité du repliage (10) est inséré dans une encoche respectivement rainure longitudinale (17) du corps de retenue ou de liaison (13) et ensuite, l'autre tôle de bord (5) est appliquée respectivement placée avec le repliage (11) sur le corps de retenue respectivement de liaison (13) et est reliée à celui-ci.

11. Procédé selon la revendication 10, **caractérisé en ce que**, à l'organe de positionnement (21), des moyens de retenue élastiques (23) sont prévus vers lesquels l'autre tôle avec le bord d'extrémité (12) du repliage peut être amenée et fixée par enclenchement ou encliquetage.

12. Procédé selon l'une des revendications 10 ou 11, **caractérisé en ce que** les moyens de retenue (23) sont prévus en même temps pour le positionnement et la retenue du corps de retenue ou de liaison (13) et aussi pour la fixation du bord d'extrémité (12) du repliage (11) de l'autre tôle (5).

13. Panneau de paroi calorifuge d'un appareil climatique, comme d'une étuve, d'une armoire à sècher, d'un appareil de réfrigération etc., présentant une paroi double isolante selon l'une des revendications 1 à 9.
